# EUROPEAN PATENT APPLICATION

(11) **EP 1 158 385 A2**
(43) Date of publication of application: **28.11.2001**
(21) Application number: 01000175.8
(22) Date of filing: 22.05.2001
(51) Int. Cl.: G06F 1/00

(54) **Trust-based link access control**

(30) Priority: 24.05.2000 US 577644
(71) Applicant: International Business Machines Corporation, Armonk, NY 10504 (US)
(72) Inventor: Bates, Cary Lee, Hursley, Winchester, Hampshire SO21 2JN (GB); Day, Paul Reuben, Hursley, Winchester, Hampshire SO21 2JN (GB); Santosuosso, John Matthew, Hursley, Winchester, Hampshire SO21 2JN (GB)
(74) Representative: Burt, Roger James, Dr.

(57) **Abstract**

An apparatus, program product and method control access to linked documents on a computer based on a calculated determination of the trustworthiness of such linked documents, so that user navigation to untrusted documents from a document with which such untrusted documents are linked can be deterred. Basing link access control on document trustworthiness permits owners, authors, developers, publishers, etc. of documents, for example, to avoid potential difficulties such as embarrassment, confusion or legal liability as a result of the content of linked-to documents under the control of third parties.

## Description

### Field of the Invention

The invention is generally related to computers and computer software. More specifically, the invention is related to access control of stored documents in a computer.

### Background of the Invention

The amount and variety of information that can be accessed through a computer continues to increase at an astounding rate. The Internet, in particular, has enabled computer users to access a wide variety of information from other computers located all over the world.

Much of the information accessible via the Internet is organized into hypertext documents, which are typically documents formatted in a language known as Hypertext Markup Language (HTML), and which are accessed via a segment of the Internet known as the World Wide Web. Hypertext documents typically include one or more embedded "hypertext links" that an end user can select to either jump to different documents, or to jump to different locations within the same document. Each hypertext document typically is identified by the storage location (known as a Uniform Resource Locator (URL)) at which the document is stored, with a hypertext link to a particular document, or "target", specifying the storage location of that document so that, upon selection of the link, that document may be retrieved.

A wide variety of other information such as text, graphics, video, sound, and animation may be integrated into hypertext documents, and moreover, these documents can be organized into "sites", typically maintained by a single entity, that collect multiple related documents together in a coherent fashion. Furthermore, due to the immense popularity of the World Wide Web, many private computer networks now also support hypertext documents, as do a number of existing computer operating systems and computer software applications.

A computer program, often referred to as a browser, is typically used to navigate between and through hypertext documents. With a browser, an end user can use a mouse or other pointing device to point and click on links such as highlighted text, images or other user interface components (for example, buttons) in documents to navigate to different documents and/or to different locations within the same document.

Given that any hypertext document can link to any other document accessible to a computer simply through the inclusion of an appropriate URL or other storage location identifier in the document, users are often able to navigate through an endless array of documents in an extremely flexible and intuitive manner. The free-form, decentralized linking of documents on the Internet therefore provides a powerful and useful interface through which users can locate interesting information simply by following links until desirable information is found.

The decentralized and uncontrolled nature of the Internet, however, is not without its drawbacks. In particular, documents under the control of particular entities, for example, publishers, owners or authors, often provide links to documents that are under the control of third parties. Nonetheless, by linking to third-party documents, those entities may somehow be perceived as endorsing or otherwise approving of the content of the third-party documents.

As an example, an owner of a web site on a religious topic might provide links to other web sites that espouse similar religious teachings. However, the owner may not have any control over the content of the other web sites, and as a result, should any other web site change to include teachings that might be inconsistent with or offensive to the owner and his or her followers, the owner would presumably not wish for readers of the other web sites to assume that the owner endorses or approves of the content of the changed web sites.

As another example, a web site dealing with providing legal, technical or medical information might link to third-party web sites to provide additional sources of similar information. Given the rapid and ongoing changes in the law, technology and medical science, however, linking to third-party web sites raises a significant concern that such third-party web sites are not kept sufficiently up to date. It would obviously be extremely undesirable for an informational web site to provide links to third-party web sites that contained incorrect or outdated information. In addition to potential embarrassment and loss of credibility, links to incorrect information could even raise the possibility of legal liability in extreme situations.

Document owners, publishers and developers have traditionally attempted to avoid links to untrustworthy third-party documents through periodic monitoring of linked-to documents and web sites. Monitoring documents and web sites in this manner, however, can be relatively time consuming, as such monitoring often requires that the documents be read and analyzed manually to determine whether the content thereof is acceptable. As a result, monitoring is often only performed on a sporadic basis, if at all, thus exposing document owners, publishers and developers to the risk that third-party documents will become untrustworthy in the interim between successive checks of such documents.

Therefore, a significant need exists in the art for a manner of limiting the risks associated with linking to third-party documents over which content control is not feasible, in particular to minimize the likelihood of mistaken endorsement or approval of third-party document content.

### Disclosure of the Invention

Accordingly, the present invention provides an apparatus, program product and method in which access to linked documents on a computer is controlled based on a calculated determination of the trustworthiness of such linked documents, so that user navigation to untrusted documents from a document with which such untrusted documents are linked can be deterred. Among other benefits, basing link access control on document trustworthiness permits owners, authors, developers, publishers, etc. of documents to avoid potential difficulties such as embarrassment, confusion or legal liability as a result of the content of linked-to documents under the control of third parties.

According to one aspect of the invention, document access in a computer is controlled by rendering at least a portion of a first document for display on a computer display, with the first document including a link for use in navigating to a second document. A determination is made as to whether the second document is trusted prior to a user attempt to navigate to the second document via the link in the first document, and user navigation to the second document via the link in the first document is deterred if the second document is determined to not be trusted.

### Brief Description of the Drawings

The present invention will now be described, by way of example only, with reference to preferred embodiments thereof as illustrated in the following drawings:
FIGURE 1 is a block diagram of a computer system consistent with the invention.
FIGURE 2 is a block diagram of an exemplary hardware and software environment for a computer from the computer system of Fig. 1.
FIGURE 3 is a flowchart illustrating a main routine executed by the browser of Fig. 2.
FIGURE 4 is an exemplary HTML syntax for a trusted link tag consistent with the invention.
FIGURE 5 is an exemplary HTML syntax for a trust exclude tag consistent with the invention.
FIGURE 6 is a flowchart illustrating the display document routine referenced in Fig. 3.
FIGURE 7 is a flowchart illustrating the test link routine referenced in Figs. 3 and 6.
FIGURE 8 is a flowchart illustrating the process trust depth routine referenced in Fig. 7.
FIGURE 9 is a flowchart illustrating the compute CRC routine referenced in Fig. 8.

### Detailed Description of the Invention

A preferred embodiment of the present invention may be used to minimize the risks associated with linking to third-party documents by analyzing and monitoring the trustworthiness of linked-to documents prior to user attempts to navigate to linked-to documents from a source document. In the illustrated embodiment, each document is identified by a storage location at which the document is stored, with links defined between documents identifying the storage locations of linked-to documents. A storage location may be internal to a workstation or other single-user computer, for example, a filename and/or path for a particular document or file stored thereon. In the alternative, a storage location may be external to a workstation, for example, as stored on a network server, for example, over a private LAN or WAN, or over a public network such as the Internet. As such, the storage location may be identified by an address in the form of a Uniform Resource Locator (URL), the format of which is well known in the art. However, it should be appreciated that the invention may also be used in connection with other storage location identification formats.

Also, in the preferred embodiment, documents are formatted in Hypertext Markup Language (HTML), a predominant format used for Internet documents. However, it should be appreciated that the invention may also be utilized with other document and file formats as well, including both text-based and non-text based documents, files, database records, etc., which will collectively be referred to hereinafter as "documents." A subset of documents are referred to herein as third- party documents insofar as the contents of such documents are controlled by entities other than an entity controlling a document that provides links to such third-party documents.

As will be discussed in greater detail below, "trust" for a document is determined based upon any number of metrics that individually or collectively infer the degree of confidence that a particular document still contains acceptable content in the interim since the trustworthiness of the document was last positively verified.

One manner of determining trust for a document is based upon detected change in the content of the document, for example, by comparing the current content of the document with the last known content thereof. Such a comparison may be implemented, for example, via a direct comparison, or may be estimated through the use of checksums, timestamps, or the like.

Another manner of determining trust for a particular document is based upon detected change in the content of one or more documents linked directly or indirectly from that document. Moreover, in any instance where the content of a document is being analyzed for change, it will be appreciated that any portion of the document may be explicitly included or excluded from the analysis, for example, so that change in a document that indicates possible lack of trustworthiness may be limited to select passages in the document.

Yet another manner of determining trust is based upon the amount of time that has passed since the document was last verified to be trustworthy. It will be appreciated by one of ordinary skill in the art having the benefit of the instant disclosure that other manners of determining the trustworthiness of a document may also be used in the alternative.

Prior to discussing specific embodiments of the invention, a brief description of exemplary hardware and software environments for use therewith is provided.

### Hardware and Software Environment

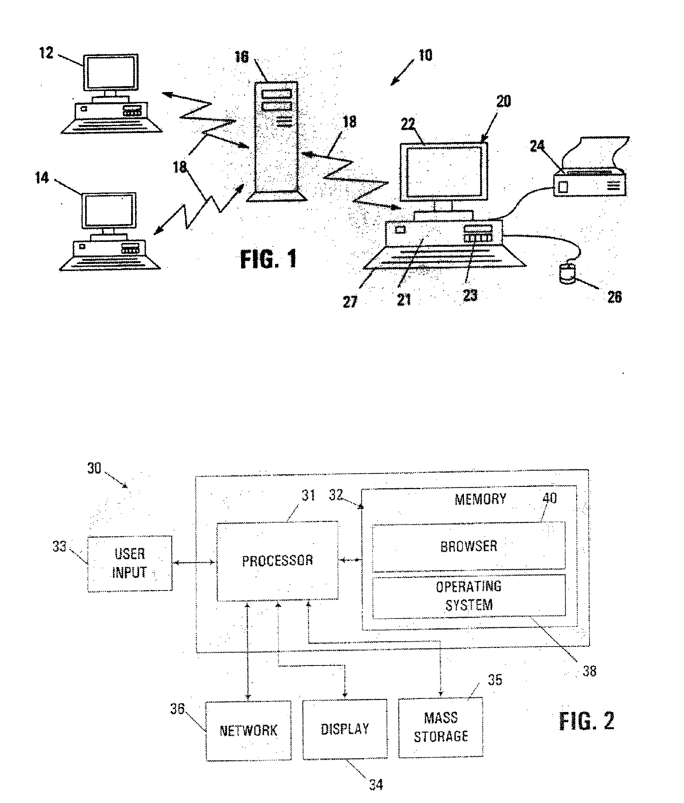

Fig. 1 illustrates a computer system 10 consistent with the invention. Computer system 10 is illustrated as a networked computer system including one or more client computers 12, 14 and 20 (for example, desktop or PC-based computers, workstations, etc.) coupled to server 16 (for example, a PC-based server, a minicomputer, a midrange computer, a mainframe computer, etc.) through a network 18. Network 18 may represent practically any type of networked interconnection, including but not limited to local-area, wide-area, wireless, and public networks (for example, the Internet). Moreover, any number of computers and other devices may be networked through network 18, for example, multiple servers.

Client computer 20, which may be similar to computers 12, 14, may include a central processing unit (CPU) 21; a number of peripheral components such as a computer display 22; a storage device 23; a printer 24; and various input devices (for example, a mouse 26 and keyboard 27), among others. Server computer 16 may be similarly configured, albeit typically with greater processing performance and storage capacity, as is well known in the art.

Fig. 2 illustrates in another way an exemplary hardware and software environment for an apparatus 30 consistent with the invention. For the purposes of the invention, apparatus 30 may represent practically any type of computer, computer system or other programmable electronic device, including a client computer (for example, similar to computers 12, 14 and 20 of Fig. 1), a server computer (for example, similar to server 16 of Fig. 1), a portable computer, a handheld computer, an embedded controller, etc. Apparatus 30 may be coupled in a network as shown in Fig. 1, or alternatively, may be a stand-alone device. Apparatus 30 will hereinafter also be referred to as a "computer", although it should be appreciated the term "apparatus" may also include other suitable programmable electronic devices consistent with the present invention.

Computer 30 typically includes at least one processor 31 coupled to a memory 32. Processor 31 may represent one or more processors (for example, microprocessors), and memory 32 may represent the random access memory (RAM) devices comprising the main storage of computer 30, as well as any supplemental levels of memory, for example, cache memories, non-volatile or backup memories (for example, programmable or flash memories), read-only memories, etc. In addition, memory 32 may be considered to include memory storage physically located elsewhere in computer 30, for example, any cache memory in a processor 31, as well as any storage capacity used as a virtual memory, for example, as stored on a mass storage device 35 or on another computer coupled to computer 30 via network 36.

Computer 30 also typically receives a number of inputs and outputs for communicating information externally. For interface with a user or operator, computer 30 typically includes one or more user input devices 33 (for example, a keyboard, a mouse, a trackball, a joystick, a touchpad, and/or a microphone, among others) and a display 34 (for example, a CRT monitor, an LCD display panel, and/or a speaker, among others).

For additional storage, computer 30 may also include one or more mass storage devices 35, for example, a floppy or other removable disk drive, a hard disk drive, a direct access storage device (DASD), an optical drive (for example, a CD drive, a DVD drive, etc.), and/or a tape drive, among others. Furthermore, computer 30 may include an interface with one or more networks 36 (for example, a LAN, a WAN, a wireless network, and/or the Internet, among others) to permit the communication of information with other computers coupled to the network. It should be appreciated that computer 30 typically includes suitable analog and/or digital interfaces between processor 31 and each of components 32, 33, 34, 35 and 36 as is well known in the art.

Computer 30 operates under the control of an operating system 38, and executes or otherwise relies upon various computer software applications, components, programs, objects, modules, data structures, etc. (for example, browser 40, among others). Moreover, various applications, components, programs, objects, modules, etc. may also execute on one or more processors in another computer coupled to computer 30 via a network 36, for example, in a distributed or client-server computing environment, whereby the processing required to implement the functions of a computer program may be allocated to multiple computers over a network.

In general, the routines executed to implement the embodiments of the present invention, whether implemented as part of an operating system or a specific application, component, program, object, module or sequence of instructions will be referred to herein as "computer programs", or simply "programs". The computer programs typically comprise one or more instructions that are resident at various times in various memory and storage devices in a computer, and that, when read and executed by one or more processors in a computer, cause that computer to perform the steps necessary to execute steps or elements embodying the various aspects of the invention. Moreover, while the invention has and hereinafter will be described in the context of fully functioning computers and computer systems, those skilled in the art will appreciate that the various embodiments of the invention are capable of being distributed as a program product in a variety of forms, and that the invention applies equally regardless of the particular type of signal bearing media used to actually carry out the distribution. Examples of signal bearing media include but are not limited to recordable type media such as volatile and non-volatile memory devices, floppy and other removable disks, hard disk drives, magnetic tape, optical disks (for example, CD- ROM's, DVD's, etc.), among others, and transmission type media such as digital and analog communication links.

In addition, various programs described hereinafter may be identified based upon the application for which they are implemented in a specific embodiment of the invention. However, it should be appreciated that any particular program nomenclature that follows is used merely for convenience, and thus the invention should not be limited to use solely in any specific application identified and/or implied by such nomenclature.

Those skilled in the art will recognize that the exemplary environments illustrated in Figs. 1 and 2 are not intended to limit the present invention. Indeed, those skilled in the art will recognize that other alternative hardware and/or software environments may be used without departing from the scope of the invention.

### Trust-Based Link Access Control

An exemplary implementation of the present invention in an Internet-based computing environment is discussed in greater detail hereinafter, specifically in the context of analyzing the trustworthiness of HTML-compatible documents referenced via URL's identifying storage locations on the Internet or other form of network. In the exemplary implementation, analysis of the trustworthiness of documents is performed at the client side, that is, within the browser. In other implementations, however, such analysis may be performed at the server side, such that documents are modified and transmitted to users with the trustworthiness of the links therein analyzed and modified as appropriate. Therefore, while the present invention will be discussed hereinafter in the context of a client-side browser application, the present invention is not limited to this particular implementation.

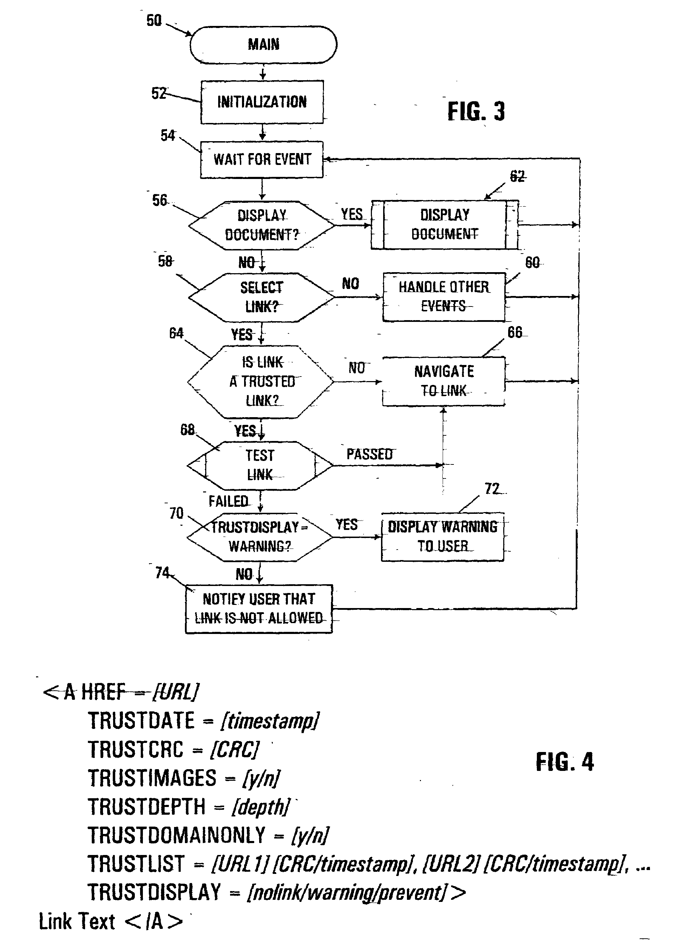

Fig. 3, in particular, illustrates a main routine 50 executed by browser 40 of Fig. 2. Upon startup of the browser, main routine 50 performs routine initialization in block 52, which is well known in the art. After initialization, an event-driven loop is initiated in block 54. In the event-driven loop, events directed for the web browser, for example, user input, receipt of downloaded data, etc., are passed to the browser via an event protocol, as is well known in the art. Alternatively, other programming models may be utilized.

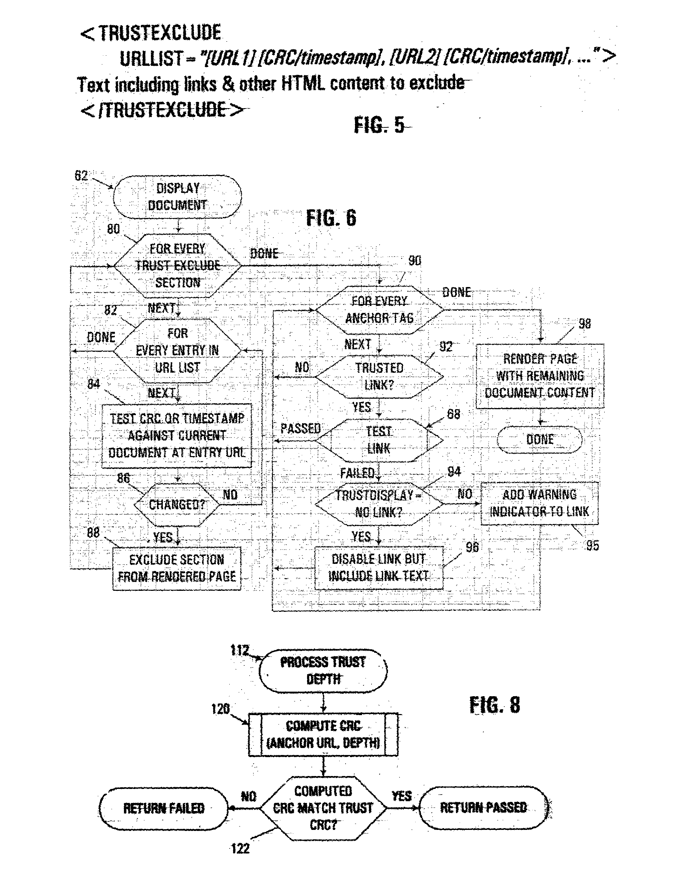

In response to reception of an event, control is passed to blocks 56-60 to decode and handle each event as appropriate. Block 56 detects a display document event, which may be generated, for example, in response to a request to display a stored document, for example, via a display refresh or downloading of a new document. The display document event is handled by passing control to a display document routine 62, discussed in greater detail below in connection with Fig. 6.

Returning to block 56, if the event is not a display document event, control passes to block 58 to determine whether the event is a select link event. If the event is not a select link event, however, control passes to block 60 to handle the event in a conventional manner.

Returning to block 58, a select link event may be generated, for example, in response to user selection of a hypertext link in a displayed document, as well as selection of a linked image, selection of a bookmark, or direct input of a URL into an address bar, among other operations. In response to a select link event, control passes to block 64 to determine first whether the selected link is a trusted link. In the illustrated implementation, determination of whether a link is a trusted link is performed by analyzing the HTML code in the document associated with the link to determine the extent to which the document has changed since the last time the document was confirmed trustworthy.

Fig. 4, for example, illustrates one possible syntax for an anchor or link tag utilized to represent a link in an HTML environment. The syntax represented in Fig. 4 represents an extension of the HTML standard to include a number of additional fields suitable for implementing trusted links consistent with the invention.

For example, a conventional HTML anchor tag includes a location identifier represented by a URL included in an HREF field. The text to display and thereby provide a display representation of the link that may be selected by the user, is typically incorporated between opening and closing anchor tags having the format "<A...>" and "<\A>".

A conventional HTML anchor tag may be extended to support trusted links by incorporating one or more additional fields, herein denoted by labels starting with "trust". One extension is a TRUSTDATE field, which is used to supply a timestamp (including, for example, a time and/or date) representing the last time the document was determined to be trustworthy, for comparison with the last time the document was updated. Thus, if a downloaded document has an update timestamp that is later than the stored timestamp in the TRUSTDATE field, it may be assumed that the document is no longer trustworthy.

Another extension is a TRUSTCRC field, which provides a checksum, for example, a cyclical redundancy checksum (CRC) value, used to represent the content of the document referenced by the tag at the time the document was last certified as trustworthy. It will be appreciated, however, that other checksums, as well as direct comparison of the content of a document or any portion thereof, may be used in lieu of a CRC.

A TRUSTIMAGES field provides a flag that indicates whether or not image data from a document is to be included within any CRC calculation. A TRUSTDEPTH field specifies a number of levels (chains of links) below the specified URL to check and include in the trustworthiness determination for a linked document.

A TRUSTDOMAINONLY field provides a flag used in connection with the TRUSTDEPTH field to tell the web browser whether or not to include links that are not in the same domain as the URL targeted by the tag. By excluding links that are not in the same domain, it may be anticipated that only the links to documents within the same website will be analyzed for change.

A TRUSTLIST field provides an alternative to the TRUSTDEPTH field, enabling a document author or certification authority to specify a list of URL's to be specifically included in determining whether a particular linked document is trustworthy. The TRUSTLIST field provides a list of URL's and associated CRC's and/or timestamps to be compared against each URL to determine if the document at any such URL has been changed. Alternatively, the TRUSTLIST field may simply provide a list of URL's to include in a group CRC calculation for the linked document.

A TRUSTDISPLAY field enables the selection of different deterrent activities performed by the browser in response to the detection of an untrusted link. One possible indication in the field is that of deactivating a link, as represented by the "no link" value, whereby the text of the link will be displayed but the link will not be capable of being selected by a user. Another possible value is a "warning" value, whereby a user will be warned via a dialog box or other user interface mechanism that a link that a user is attempting to navigate to is untrusted. Another possible value is represented by the "prevent" value, where the user is warned that a link is untrusted, and is prevented from navigating the linked document in response to user selection of the link.

Additional deterrent factors may also be utilized, as will become more apparent below. For example, an untrusted link may have a warning indicator or other form of highlighting associated therewith to indicate the untrusted status (and/or the trusted status) of a link. For example, colour, icon, patterns, sounds, bubble text, etc., may be used to represent or highlight an untrusted link. Any of these deterrent operations may be used individually or in combination with one another. Moreover, rather than incorporating such parameters within a link tag, selection of such deterrent operations may be selected via local settings, cookies, etc., by either the document author or the local user. User settings may also be changeable locally upon the input of suitable authorization, for example, so that parents could change the deterrent operations performed for their children.

As shown in Fig. 5, an additional type of tag, referred to herein as a TRUSTEXCLUDE tag, may also be used to omit a region of document content in response to the trustworthiness of any number of listed links. As shown in Fig. 5, such a tag may include a URLLIST field that provides a list of URL's and associated CRC's and/or dates used to determine whether a link and its associated content should be omitted from the display representation of the document. Starting and ending TRUSTEXCLUDE tags are placed around a region of content to be selectively displayed. In response to the determination of untrustworthiness of any of the listed URL's, the entire region is excluded from the display.

In addition, in some embodiments it may be desirable to incorporate alternate content to be displayed in response to a determination of untrustworthiness within a TRUSTEXCLUDE region. For example, a pair of alternate content tags "<CONTENTIFUNTRUSTED>" and "</CONTENTIFUNTRUSTED>" may be embedded between the "<TRUSTEXCLUDE>" and "</TRUSTEXCLUDE>" tags defining a TRUSTEXCLUDE region to delimit alternate content to be displayed. In the alternative, an ALTSRC field could be used in a similar manner to that used with HTML <LAYER> tags, or a TRUSTEXCLUDE region could be queried using an embedded script to determine if the region should be displayed or whether a particular layer should be made visible.

Any of the above fields may be used separately or in combination with the other fields. Also, it will be appreciated that in non-HTML environments, other manners of representing both TRUSTEXCLUDE regions and the trusted link parameter information may be used in the alternative. Selection of such alternate data storage formats would be well within the ability of one of ordinary skill in the art having the benefit of the instant disclosure.

Returning to Fig. 3, determination of whether a link is a trusted link in block 64 may be performed in a number of manners, for example, by detecting any of the enhanced fields discussed in connection with Fig. 4. If a link is determined to not be a trusted link, control may pass to block 66 to navigate to the link in a conventional manner. However, if the link is determined to be a trusted link, control instead passes from block 64 to block 68 to call a test link routine and determine whether the link is trustworthy. If the link is determined to be trustworthy, control passes directly to block 66 to navigate to the link. In addition, in some embodiments it may be desirable to indicate that the link is a trusted link and/or that the link has been certified as trustworthy, prior to passing control to block 66.

If, however, the link is found not to be trustworthy, control passes to block 70 to determine whether the TRUSTDISPLAY field associated with the link is set to "warning". If so, control passes to block 72 to display a warning dialog box to the user, prior to passing control to block 66 to navigate to the link.

Typically, display of a warning may be in the form of a dialog box which must be dismissed prior to permitting navigation to the link. In addition, it may be desirable to permit the user to cancel navigation to the link upon display of the warning.

Returning to block 70, if the TRUSTDISPLAY field is not set to "warning", it is assumed that the TRUSTDISPLAY field is set to "prevent", as it would not be possible in the main routine as illustrated herein for the link to be activated if the "no link" value is set for the TRUSTDISPLAY field (as will become more apparent from the discussion below associated with Fig. 6). As such, control passes from block 70 to block 74 to notify the user that the link is not allowed. Navigation to the link is further prohibited by bypassing block 66, and returning directly to block 54. In other embodiments, no prior notification to the user may be provided, rather, only the navigation to the link may be prohibited.

Fig. 6 illustrates display document routine 62 in greater detail. Routine 62 begins in block 80 by scanning through the document to process every TRUSTEXCLUDE section defined therein. A TRUSTEXCLUDE section is defined by starting and ending tags having the format described above in connection with Fig. 5. For each such section, control passes to block 82 to process every entry in the URLLIST field provided therein. For each such entry, control passes to block 84 to test the CRC or date (as provided in the URLLIST) against that of a current version of the document stored at the URL specified in the entry. Typically, block 84 incorporates retrieval of at least a timestamp or a CRC, or the entire document, for the URL provided in the list. Based upon this test, block 86 determines whether the document has changed. If not, control passes to block 82 to process the next entry in the URLLIST. If, however, the document has been determined to have changed, control passes to block 88 to exclude the section between the TRUSTEXCLUDE tags from the rendered page, for example, by deleting the document content associated with the section from a temporary version of the HTML source document, or if alternate content is provided within the TRUSTEXCLUDE tag, by modifying the document content to display such alternate content in lieu of the excluded content. Upon completion of block 88, control passes to block 80 to process additional TRUSTEXCLUDE sections in the document.

Once every TRUSTEXCLUDE section in the document has been processed, control passes to block 90 to process every anchor tag in the document. For each such anchor tag, control passes to block 92 to determine whether the anchor tag is a trusted link. If not, control returns to block 90 to process the next anchor tag.

If, however, the link is a trusted link, control passes to block 68 to call the test link routine, and thereby determine if the document referenced by the link has changed, and is therefore determined to be untrustworthy.

If the test link routine returns a "passed" result, control returns to block 90 to process additional anchor tags. If, however, the test link routine returns a "failed" result, control passes to block 94 to determine whether the TRUSTDISPLAY field is "no link" value. If not, control passes to block 95 to optionally add a warning indicator to the link display representation, for example, a unique colour, icon, etc., that will indicate to a user that a link is untrustworthy. Control then returns to block 90.

Returning to block 94, if the TRUSTDISPLAY field is set to "no link", control passes to block 96 to disable the link, but include the linked text between the opening and closing anchor tags for the trusted link. Disabling the link is typically performed by removing the anchor tags from the temporary version of the document, leaving the linked text therebetween within the document.

Returning to block 90, once every anchor tag has been processed, control passes to block 98 to render the page with the remaining document content -- i.e., with any excluded sections and anchor tags associated with untrusted links removed or omitted as appropriate. Rendering a page based upon HTML-based content is an operation that is well known in the art, and will not be discussed in further detail herein. Upon completion of rendering of the page, routine 62 is complete.

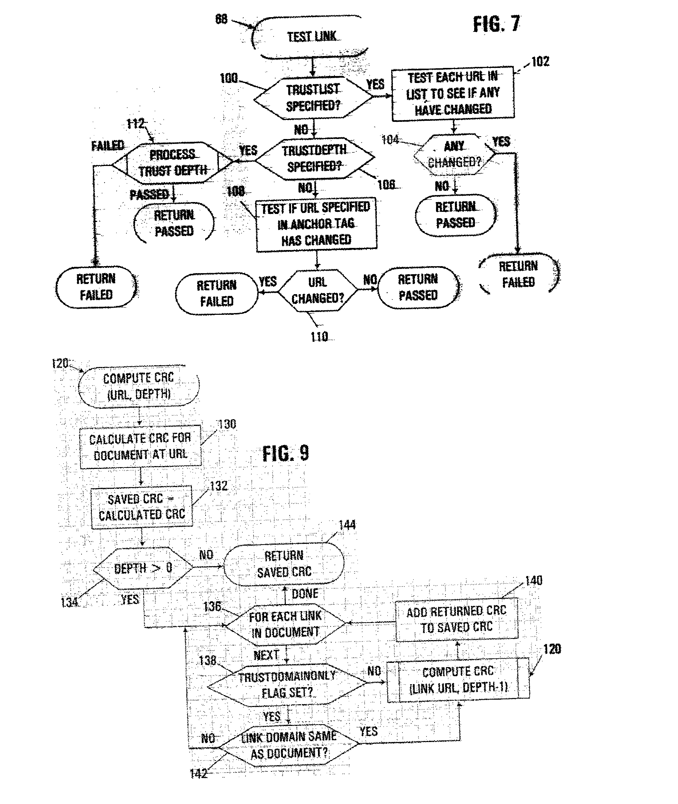

Fig. 7 illustrates test link routine 68 in greater detail. Routine 68 begins in block 100 by determining whether a TRUSTLIST field is specified for the trusted link. If so, control passes to block 102 to test each URL in the list to determine if any linked document in the list has changed, that is, by analyzing the CRC or timestamp specified in the URLLIST.

Block 104 then determines whether any such referenced document has changed, and based upon the result, returns either a "failed" or "passed" indication upon termination of the routine.

Returning to block 100, if a TRUSTLIST field is not specified, control passes to block 106 to determine whether a TRUSTDEPTH value is specified, that is, whether a non-zero value is provided in the TRUSTDEPTH field in the trusted link tag. If not, only the document referenced in the trusted link is tested in block 108, to determine whether the document has changed, and is therefore not trustworthy. Control then passes to block 110 to determine whether the URL has changed, returning either a "failed" or "passed" result based upon the changed status of the document.

Returning to block 106, if a TRUSTDEPTH value is specified, control passes to a process trust depth routine 112, which returns either a "passed" or "failed" result that routine 68 forwards to the calling routine as the response to the test link operation.

Fig. 8 illustrates process trust depth routine 112 in greater detail, which operates by calling a compute CRC routine 120, passing as input to the routine the URL specified in the anchor tag and the current depth specified in the anchor tag. The result returned by routine 120 is a CRC that incorporates the CRC of the current document as well as any child documents based upon the settings specified in the anchor tag, as will be discussed in greater detail below. Based upon this computed CRC, block 122 compares the computed CRC with that specified in the TRUSTCRC field of the anchor tag, returning a "passed" value if the CRC's match, and returning a "failed" value if they do not.

Fig. 9 illustrates compute CRC routine 120 in greater detail, which operates as a recursive routine to process each link defined in the tree of links emanating from a linked document referenced at the anchor tag. Routine 120 begins in block 130 by calculating a CRC for the document referenced at the input URL to the routine. A local variable, referred to as SAVED CRC, is initialized with the calculated CRC value in block 132. Next, block 134 determines whether the depth variable provided as input to the routine is greater than zero. If so, control passes to block 136 to process each link in the document referenced at the input URL.

For each such link, control passes to block 138 to determine whether the TRUSTDOMAINONLY flag for the anchor is set, indicating that only URL's from the same domain as the primary URL from the anchor tag should be incorporated into the CRC calculation.

Assuming first that the flag is not set, control passes to block 120 to recursively call the compute CRC routine 120, providing the URL specified in the currently-processed link and a value equal to the depth value input to routine 120 less one as the input to the recursive function call. Upon completion of the recursive call, control then passes to block 140 to add the CRC returned from the function call to the local SAVED CRC value initialized in block 132. Control then returns to block 136 to process each additional link in the document. Once all such links have been processed, control is passed to block 144 to return the SAVED CRC value as the result of the routine.

Returning to block 138, if the TRUSTDOMAINONLY flag is set, control passes to block 142 to determine whether the domain for the link currently being processed is the same as that specified in the anchor. If not, control returns to block 136 to process the next link in the document. If, however, the domains match, control passes to block 120 to recursively call the compute CRC routine.

Returning next to block 134, if the depth input to the compute CRC routine is not greater than zero, the CRC for the document itself is returned by passing control directly to block 144. As such, it will be appreciated that recursive calls to routine 120 will result in the CRC for each document linked within the selected depth in the overall calculation of the CRC for the document referenced in the anchor tag.

Other manners of calculating the CRC for a tree of documents may be used in the alternative. For example, it may be desirable to test each link processed by the compute CRC routine to determine whether the link has already been processed during the current CRC computation, so that the link can be disregarded and a zero value returned from the associated compute CRC routine instance. Doing so would prevent multiple links to the same document from being counted multiple times.

As discussed above, an optional TRUSTIMAGES field may be incorporated into a trusted link to indicate whether or not image data should be incorporated into CRC determinations. As such, the CRCTEST performed in blocks 84, 102, 108 and 130 of Figs. 6, 7 and 9, may correctively incorporate or exclude image data based upon the result of the anchor tag contents. Moreover, a like algorithm may be utilized to specifically include or exclude portions of a particular document, for example, so that only regions considered to be important will be incorporated into a CRC calculation. Other manners of modifying a CRC based upon the type of data may also be used in the alternative. Various modifications may be made to the illustrated embodiments without departing from the scope of the invention. For example, different levels of trust may be defined and reported to users, for example, to distinguish between trustworthiness based upon changes to a document, changes to documents referenced by that document, expiration of a document, changes in a particular region of a document, etc. In addition, determination of whether a document is trustworthy based upon a CRC or date may be selectable based upon user settings.

It will also be appreciated that some form of verification process may also be supported from the server side, in association with author or publisher of a particular document incorporating trusted links. For example, an automated system whereby an author or publisher could analyze links and update the CRC, date or other parameters within the links may be provided, and would be well within the ability of one of ordinary skill in the art having the benefit of the instant disclosure.

In addition, trustworthiness may be based on expiration of a document, that is, by comparing the timestamp of the TRUSTDATE field with the current time, rather than the timestamp of a previous version of a document. It may also be desirable to provide trusted control over bookmarks, as well as to indicate the trustworthiness of a document in association with selection of a bookmarked document. Also, as discussed above, it may be desirable to perform trustworthiness testing prior to serving a document to a user, whereby untrusted links could simply be passed to users as deactivated or deleted links in the HTML text, thus requiring no modification to a conventional browser to view documents processed in such a manner. The above- described functionality may also be implemented with the use of a plugin, or with the use of an embedded script or other downloadable executable program. It will also be appreciated that trustworthiness checks may be performed in a background process prior to or during display of a document, and prior to actual user attempts to navigate to a document referenced by a trusted link.

## Claims

1. A method of controlling access to linked documents in a computer, said method comprising the steps of:
rendering at least a portion of a first document for display on a computer display, the first document including a link for use in navigating to a second document;
determining whether the second document is trusted prior to a user attempt to navigate to the second document via the link in the first document; and
deterring user navigation to the second document via the link in the first document if the second document is determined to not be trusted.

2. The method of claim 1, wherein determining whether the second document is trusted includes determining whether the second document has changed since the second document was last determined to be trusted.

3. The method of claim 2, wherein determining whether the second document has changed includes comparing a current checksum for a current copy of the second document with a checksum for a prior copy therefor.

4. The method of claim 2 or claim 3, wherein determining whether the second document has changed includes comparing a first timestamp representative of when the second document was last changed with a second timestamp representative of when the second document was last determined to be trusted.

5. The method of claim 1, wherein determining whether the second document is trusted includes determining whether any additional documents referenced by links in the second document have changed.

6. The method of claim 5, wherein determining whether any additional documents referenced by links in the second document have changed includes determining whether any additional documents within a predetermined link depth have changed.

7. The method of claim 5 or claim 6, wherein determining whether any additional documents referenced by links in the second document have changed includes determining whether any documents included within a predetermined document list have changed.

8. The method of claim 1, wherein determining whether the second document is trusted and deterring user navigation to the second document are performed prior to transmission of the first document to the user's computer.

9. The method of claim 1, wherein determining whether the second document is trusted and deterring user navigation to the second document are performed after transmission of the first document to the user's computer, and prior to display of the first document on the computer display.

10. The method of claim 1, wherein deterring user navigation to the second document includes omitting display of the link from the rendered portion of the first document.

11. The method of claim 10, wherein omitting display of the link from the rendered portion of the first document includes omitting display of additional document content disposed proximate the link in the first document.

12. The method of claim 1, wherein deterring user navigation to the second document includes deactivating the link.

13. The method of claim 1, wherein deterring user navigation to the second document includes highlighting a display representation of the link to indicate that the second document is not trusted.

14. The method of claim 1, wherein deterring user navigation to the second document includes displaying a warning in response to a user attempt to navigate to the second document.

15. An apparatus for controlling access to linked documents in a computer, said apparatus comprising:
a memory within which is resident at least a portion of a first document that includes a link for use in navigating to a second document; and
a program configured to render at least a portion of the first document on a computer display, to determine whether the second document is trusted prior to a user attempt to navigate to the second document via the link in the first document, and to deter user navigation to the second document via the link in the first document if the second document is determined to not be trusted.

16. A computer program product for controlling access to linked documents in a computer, said computer program product, when executed on a computer, performing the method of claim 1.
